# EUROPEAN PATENT APPLICATION

(11) **EP 4 783 719 A1**
(43) Date of publication of application: **29.07.2026**
(21) Application number: 24884804.6
(22) Date of filing: 30.10.2024
(51) Int. Cl.: H04W 74/0833

(54) **ACCESS METHOD AND APPARATUS**

(30) Priority: 31.10.2023 CN 202311439194
(71) Applicant: HUAWEI TECHNOLOGIES CO., LTD., Shenzhen, Guangdong 518129 (CN)
(72) Inventor: LI, Chenwan, Shenzhen, Guangdong 518129 (CN); SHI, Yulong, Shenzhen, Guangdong 518129 (CN); WANG, Rui, Shenzhen, Guangdong 518129 (CN); WU, Yiling, Shenzhen, Guangdong 518129 (CN); CHEN, Lei, Shenzhen, Guangdong 518129 (CN)
(74) Representative: Gill Jennings & Every LLP
(86) International application number: PCT/CN2024/128436
(87) International publication number: WO 2025/092802

(57) **Abstract**

An access method and an apparatus are provided, applied to fields such as ambient internet of things (Ambient IoT). The method includes: sending a first random access request to a network device; and receiving a random access response message from the network device, where the random access response message includes first acknowledgment information and second acknowledgment information, and the first acknowledgment information indicates that random access of a first terminal device corresponding to the first random access request succeeds. According to the foregoing procedure, after receiving a plurality of random access requests in a same time unit, the network device may include, in one random access response message, acknowledgment information corresponding to each of the plurality of random access requests, so that contention resolution for a plurality of terminal devices is achieved via one random access response message and the plurality of terminal devices accomplish random access, thereby increasing a random access capacity and improving random access efficiency.

## Description

### CROSS-REFERENCE TO RELATED APPLICATIONS

This application claims priority to Chinese Patent Application No. 202311439194.0, filed with the China National Intellectual Property Administration on October 31, 2023 and entitled "ACCESS METHOD AND APPARATUS", which is incorporated herein by reference in its entirety.

### TECHNICAL FIELD

This application relates to the field of communication technologies, and in particular, to an access method and an apparatus.

### BACKGROUND

Internet of things (internet of things, IoT) has been introduced into wireless communication systems. A tag (tag) in IoT may serve as a terminal device, a base station may serve as a reader (reader), and the tag may communicate with the base station. In scenarios such as tag inventory, the reader may page a tag via paging signaling. After the tag receives the paging signaling, the reader indicates an inventory round via query (Query) signaling, and the tag initiates random access within the inventory round.

Currently, in a random access procedure, at most one tag is allowed to perform successful access within a slot. To be specific, if a plurality of tags send random access requests in one slot, although the base station may receive the requests, the base station sends a contention resolution message to only one tag. For the other tags, the tags determine that their random access fails because they receive no contention resolution message, and need to initiate access again. Therefore, according to the current random access procedure, a quantity of tags that can be admitted per unit time is small, and a random access capacity is not high.

### SUMMARY

This application provides an access method and an apparatus, to increase a random access success rate.

According to a first aspect, this application provides an access method. The method is applicable to a scenario such as an ambient internet of things. The method is performed by a terminal device or a module or a chip in the terminal device. An example in which the method is performed by the terminal device is used for description herein. In the method, a first random access request is sent to a network device; and a random access response message is received from the network device, where the random access response message includes first acknowledgment information and second acknowledgment information, and the first acknowledgment information indicates that random access of a first terminal device corresponding to the first random access request succeeds.

According to the foregoing procedure, the random access response message includes a plurality of pieces of acknowledgment information, so that contention resolution for a plurality of terminal devices can be completed by using one random access response message. In this way, the plurality of terminal devices complete random access, to increase a random access capacity, improve random access efficiency, and increase a random access success rate of the terminal device.

In a possible implementation, the random access response message includes first header information and second header information. The first header information corresponds to the first acknowledgment information, the first header information is adjacent to the first acknowledgment information, the second header information corresponds to the second acknowledgment information, and the second header information is adjacent to the second acknowledgment information.

In the foregoing method, because each piece of acknowledgment information corresponds to one piece of header information, the terminal device may determine, based on a quantity of pieces of header information, a quantity of pieces of acknowledgment information included in the random access response message, and determine a location of corresponding acknowledgment information based on a location of the header information, to improve efficiency of parsing the random access response message by the terminal device.

In a possible implementation, the random access response message includes one piece of header information, and the header information includes quantity information of the acknowledgment information.

In the foregoing method, a quantity of pieces of acknowledgment information is directly indicated by using the header information, to reduce overheads of the random access response message and improve data transmission efficiency.

In a possible implementation, the first acknowledgment information includes a part or all of content of the first random access request.

In a possible implementation, the method further includes: sending uplink data to the network device by using a first resource element, where the first resource element is determined based on the first acknowledgment information.

In the foregoing method, a correspondence between the first resource element and the first acknowledgment information is established, so that the terminal device directly determines the first resource element based on the first acknowledgment information, to reduce overheads of resource indication and improve resource utilization.

In a possible implementation, that the first resource element is determined based on the first acknowledgment information includes: There is a correspondence between the first acknowledgment information and a time domain resource and/or a frequency domain resource of the first resource element.

In a possible implementation, that the first resource element is determined based on the first acknowledgment information includes: The first acknowledgment information includes resource configuration information, and the resource configuration information indicates a time domain resource and/or a frequency domain resource of the first resource element.

In the foregoing method, the first acknowledgment information indicates the first resource element, so that implementation complexity of the terminal device can be reduced, and power consumption of the terminal device can be reduced.

In a possible implementation, the time domain resource of the first resource element is a first time unit. If it is determined, based on the first acknowledgment information, that a 1^{st} time unit after the random access response message is the first time unit, the uplink data is sent in the 1^{st} time unit after the random access response message; or if it is determined, based on the first acknowledgment information, that an n^{th} time unit after the random access response message is the first time unit, the uplink data is sent in a 1^{st} time unit after n-1 first messages, where n is an integer greater than 0, and the first message is used for triggering a time unit; or if it is determined, based on the first acknowledgment information, that an n^{th} time unit after the random access response message is the first time unit, the uplink data is sent in a 1^{st} time unit after a first message including a first index, where the first index matches an index of the first time unit.

In a possible implementation, the second acknowledgment information indicates that random access of a second terminal device succeeds.

In a possible implementation, the first terminal device is an ambient internet of things terminal device.

According to a second aspect, this application provides an access method. The method is applicable to a scenario such as an ambient internet of things scenario. The method is performed by a network device or a module or a chip in the network device. An example in which the method is performed by the network device is used for description herein. In the method, a first random access request and a second random access request are received in a time unit, where the first random access request is from a first terminal device, and the second random access request is from a second terminal device; and a random access response message is sent, where the random access response message includes first acknowledgment information and second acknowledgment information, the first acknowledgment information indicates that random access of the first terminal device succeeds, and the second acknowledgment information indicates that random access of the second terminal device succeeds.

According to the foregoing procedure, after receiving a plurality of random access requests in a same time unit, the network device may include, in one random access response message, acknowledgment information corresponding to each of the plurality of random access requests, so that contention resolution for a plurality of terminal devices is complete by using one random access response message and the plurality of terminal devices complete random access, to increase a random access capacity and improve random access efficiency.

In a possible implementation, the random access response message includes first header information and second header information.

The first header information corresponds to the first acknowledgment information, the first header information is adjacent to the first acknowledgment information, the second header information corresponds to the second acknowledgment information, and the second header information is adjacent to the second acknowledgment information.

In a possible implementation, the random access response message includes one piece of header information, and the header information includes quantity information of the acknowledgment information.

In a possible implementation, the first acknowledgment information includes a part or all of content of the first random access request, and the second acknowledgment information includes a part or all of content of the second random access request.

In a possible implementation, the method further includes: receiving uplink data from the first terminal device by using a first resource element, where the first resource element is determined based on the first acknowledgment information.

In a possible implementation, that the first resource element is determined based on the first acknowledgment information includes:

There is a correspondence between the first acknowledgment information and a time domain resource and/or a frequency domain resource of the first resource element.

In a possible implementation, that the first resource element is determined based on the first acknowledgment information includes: The first acknowledgment information includes resource configuration information, and the resource configuration information indicates a time domain resource and/or a frequency domain resource of the first resource element.

In a possible implementation, the time domain resource of the first resource element is a first time unit. If it is determined, based on the first acknowledgment information, that a 1^{st} time unit after the random access response message is the first time unit, the uplink data is received in the 1^{st} time unit after the random access response message; or if it is determined, based on the first acknowledgment information, that an n^{th} time unit after the random access response message is the first time unit, the uplink data is received in a 1^{st} time unit after n-1 first messages, where n is an integer greater than 0, and the first message is used for triggering a time unit; or if it is determined, based on the first acknowledgment information, that an n^{th} time unit after the random access response message is the first time unit, the uplink data is received in a 1^{st} time unit after a first message including a first index, where the first index matches an index of the first time unit.

In a possible implementation, the first terminal device is an ambient internet of things terminal device.

According to a third aspect, this application provides an access method. The method is applicable to a scenario such as an ambient internet of things scenario. The method is performed by a network device or a module or a chip in the network device. An example in which the method is performed by the network device is used for description herein. In the method, a first random access request is sent to a network device, and a timer is started; before the timer expires, a second random access response message is received, and if the second random access response message does not match the first random access request, the second random access response message is ignored; and a first random access response message is received, and if the first random access response message matches the first random access request, first uplink data is sent to the network device.

According to the foregoing procedure, when a plurality of terminal devices send random access requests in a same time unit, after receiving a plurality of random access requests in a same time unit, the network device may sequentially send a plurality of random access response messages, to complete contention resolution for the plurality of terminal devices, so that the plurality of terminal devices complete random access, to increase a random access capacity and improve random access efficiency.

In a possible implementation, before the timer expires, if the first random access response message is not received or first signaling is received, it is determined that random access fails. The first signaling is used for triggering a time unit, or the first signaling indicates that a time unit in which the first random access request is located ends.

In a possible implementation, timing duration of the timer is preset or determined based on configuration information from the network device.

According to a fourth aspect, this application provides an access method. The method is applicable to a scenario such as an ambient internet of things scenario. The method is performed by a terminal device or a module or a chip in the terminal device. An example in which the method is performed by the terminal device is used for description herein. In the method, a first random access request and a second random access request are received in a time unit, where the first random access request is from a first terminal device; and
a first random access response message is sent, and a second random access response message is sent, where the first random access response message indicates that random access of the first terminal device succeeds, and the second random access response message indicates that random access of the second terminal device succeeds.

In a possible implementation, after sending the first random access response message and before sending the second random access response message is sent, the method further includes: receiving first uplink data, where the first uplink data is from the first terminal device.

In a possible implementation, the first terminal device is an ambient internet of things terminal device.

According to a fifth aspect, this application further provides a communication apparatus. The communication apparatus can implement any method according to any one of the first aspect to the fourth aspect. The communication apparatus may be implemented by hardware, or may be implemented by executing corresponding software by hardware. The hardware or the software includes one or more units or modules corresponding to the foregoing functions.

In a possible implementation, the communication apparatus includes a processor. The processor is configured to support the communication apparatus in performing a corresponding function of the network device, the terminal device, or a core network device in the foregoing methods. The communication apparatus may further include a memory. The memory may be coupled to the processor, and the memory stores program instructions and data that are necessary for the communication apparatus. Optionally, the communication apparatus further includes an interface circuit. The interface circuit is configured to support communication between the communication apparatus and a device such as a terminal device.

In a possible implementation, the communication apparatus includes corresponding functional modules respectively configured to implement the steps in the foregoing method. The function may be implemented by hardware, or may be implemented by executing corresponding software by hardware. The hardware or software includes one or more modules corresponding to the foregoing functions.

In a possible implementation, a structure of the communication apparatus includes a processing unit and a communication unit. These units may perform corresponding functions in the foregoing method examples. For details, refer to descriptions in the method according to any one of the first aspect to the fourth aspect. Details are not described herein.

According to a sixth aspect, a communication apparatus is provided. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement a functional module of the method according to any possible implementation of any one of the first aspect to the fourth aspect by using a logic circuit or by executing a computer program or instructions. Optionally, the communication apparatus further includes a memory, and the memory is configured to store a computer program or instructions.

According to a seventh aspect, a computer-readable storage medium is provided. The computer-readable storage medium stores a computer program or instructions. When the computer program or the instructions are executed by a processor, the method according to any possible implementation of any one of the first aspect to the fourth aspect is implemented.

According to an eighth aspect, a computer program product storing instructions is provided. When a computer reads and executes the computer program product, the method according to any possible implementation of any one of the first aspect to the fourth aspect is implemented.

According to a ninth aspect, a circuit is provided. The circuit is configured to perform the method according to any possible implementation of any one of the first aspect to the fourth aspect, and the circuit may include a chip circuit. Optionally, the circuit may be further coupled to a memory.

According to a tenth aspect, a chip is provided. The chip includes a processor. When executing a computer program or instructions, the processor is configured to implement the method according to any possible implementation of any one of the first aspect to the fourth aspect. Optionally, the chip may further include a memory. The chip may include a chip, or may include a chip and another discrete device.

According to an eleventh aspect, a communication apparatus is provided. The communication apparatus includes a processor. The processor implements the method according to any possible implementation of any one of the first aspect to the fourth aspect by using a logic circuit or by executing a computer program or instructions.

According to a twelfth aspect, a communication apparatus is provided. The communication apparatus includes a unit or a module configured to perform the method according to any possible implementation of any one of the first aspect to the fourth aspect.

According to a thirteenth aspect, an embodiment of this application further provides a communication system. The communication system includes a terminal device configured to implement the method according to any one of the first aspect and the possible implementations of the first aspect, and a network device configured to implement the method according to any one of the second aspect and the possible implementations of the second aspect. Alternatively, the communication system includes a network device configured to implement the method according to any one of the third aspect and the possible implementations of the third aspect, and a terminal device configured to implement the method according to any one of the fourth aspect and the possible implementations of the fourth aspect.

### BRIEF DESCRIPTION OF DRAWINGS

FIG. 1 is a diagram of an architecture of an access network device according to an embodiment of this application;
FIG. 2 is a diagram of an architecture of an ambient internet of things according to an embodiment of this application;
FIG. 3 is a diagram of a network architecture according to an embodiment of this application;
FIG. 4 is a diagram of a network architecture according to an embodiment of this application;
FIG. 5 is a diagram of a network architecture according to an embodiment of this application;
FIG. 6 is a diagram of a network architecture according to an embodiment of this application;
FIG. 7 is a diagram of an inventory procedure according to an embodiment of this application;
FIG. 8 is a schematic flowchart of an access method according to an embodiment of this application;
FIG. 9 is a diagram of a structure of a random access response message according to an embodiment of this application;
FIG. 10 is a diagram of a structure of a random access response message according to an embodiment of this application;
FIG. 11 is a schematic flowchart of a data transmission method according to an embodiment of this application;
FIG. 12 is a diagram of a resource element according to an embodiment of this application;
FIG. 13 is a schematic flowchart of an access method according to an embodiment of this application;
FIG. 14 is a diagram of a structure of a communication apparatus according to an embodiment of this application;
FIG. 15 is a diagram of a structure of a communication apparatus according to an embodiment of this application; and
FIG. 16 is a diagram of a structure of a communication apparatus according to an embodiment of this application.

### DESCRIPTION OF EMBODIMENTS

The following describes the technical solutions in embodiments of this application with reference to the accompanying drawings in embodiments of this application. It is clear that the described embodiments are merely some but not all of embodiments of this application. In this application, the terms "first" and "second" and corresponding term numbers are intended to distinguish between similar objects but do not necessarily describe a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

The method provided in embodiments of this application may be applied to various mobile communication systems, for example, internet of things (internet of things, IoT), narrowband internet of things (narrowband internet of things, NB-IoT), a 4th generation (4th generation, 4G) communication system (for example, long term evolution (long term evolution, LTE)), a 5th generation (5th generation, 5G) communication system (for example, 5G new radio (new radio, NR)), an LTE and NR hybrid architecture, or a new communication system emerging in 6G or future communication development. Alternatively, the communication system may include a machine to machine (machine to machine, M2M) network, a machine type communication (machine type communication, MTC) network, or another network. For example, the method provided in embodiments of this application may be applied to a communication system that supports an ambient internet of things (ambient IoT, AIoT) technology.

The method and an apparatus provided in embodiments of this application are based on a same or similar technical concept. Because problem resolving principles of the method and the apparatus are similar, mutual reference may be made to implementations of the apparatus and the method. Repeated descriptions are not provided again.

The following first describes some terms in embodiments of this application, to facilitate understanding of a person skilled in the art.

In embodiments of this application, a network device is a device in a wireless network, and the network device may also be referred to as a network apparatus, a radio access network device, or an access network device. For example, the network device may be a radio access network (radio access network, RAN) node that connects a terminal device to the wireless network, and may also be referred to as an access network device. The network device includes but is not limited to: a base station (base station), an evolved NodeB (evolved NodeB, eNodeB), a transmission-reception point (transmission reception point, TRP), a next generation NodeB (next generation NodeB, gNB) in a 5th generation (5th generation, 5G) mobile communication system, an access network device in an open radio access network (open radio access network, O-RAN), a next generation base station in a 6th generation (6th generation, 6G) mobile communication system, a base station in a future mobile communication system, an access node in a wireless fidelity (wireless fidelity, Wi-Fi) system or the like; or may be a module or unit that completes a part of functions of the base station, for example, may be a central unit (central unit, CU), a distributed unit (distributed unit, DU), a central unit control plane (CU control plane, CU-CP) module, or a central unit user plane (CU user plane, CU-UP) module. The access network device may be a macro base station, may be a micro base station or an indoor base station, or may be a relay node, a donor node, or the like. A specific technology and a specific device form that are used by the network device are not limited in this application.

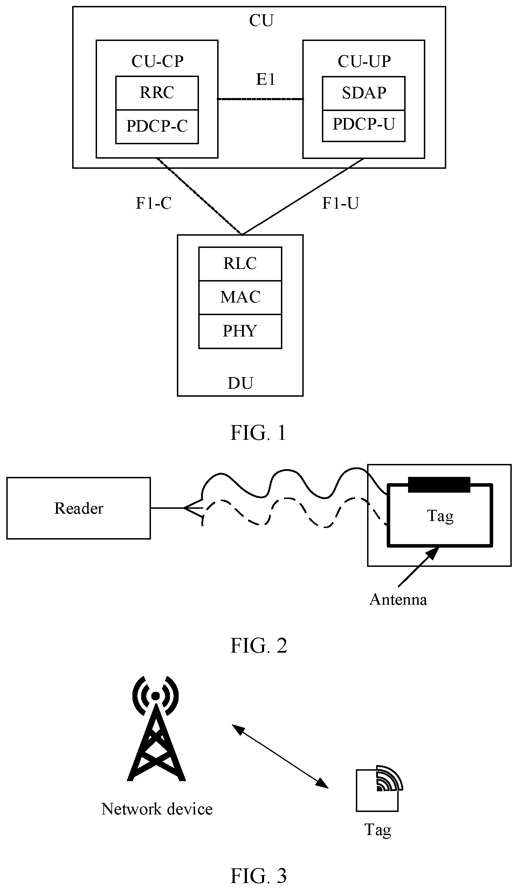

As shown in FIG. 1, in some implementations, the network device may include a central unit (central unit, CU) and a distributed unit (distributed unit, DU). The RAN device including a CU node and a DU node separates protocol layers of a gNB in an NR system. Functions of some protocol layers are controlled by the CU in a centralized manner. Functions of some or all remaining protocol layers are distributed in the DU, and the CU controls the DU in a centralized manner. Further, the CU may be further divided into a control plane (CU-CP) and a user plane (CU-UP). The CU-CP is responsible for a control plane function, mainly including radio resource control (radio resource control, RRC) and a packet data convergence protocol (packet data convergence protocol, PDCP) corresponding to the control plane (namely, PDCP-C). The PDCP-C is mainly responsible for data encryption and decryption, integrity protection, data transmission, and the like on a control plane. The CU-UP is responsible for a user plane function, mainly including a service data adaptation protocol (service data adaptation protocol, SDAP) and a PDCP corresponding to the user plane (namely, PDCP-U). The SDAP is mainly responsible for processing data of a core network and mapping a flow (flow) to a bearer. The PDCP-U is mainly responsible encryption and decryption, integrity protection, header compression, sequence number maintenance, data transmission, and the like on a data plane. The CU-CP and the CU-UP are connected through an E1 interface. The CU-CP, on behalf of the gNB, is connected to the core network through an NG interface and connected to the DU through an F1 interface-control plane (namely, F1-C). The CU-UP is connected to the DU through an F1 interface-user plane (namely, F1-U). Certainly, in another possible implementation, the PDCP-C is alternatively in the CU-UP.

It may be understood that, in different systems, the CU (including the CU-CP or the CU-UP) or the DU may alternatively have different names, but a person skilled in the art can understand meanings of the names. For example, in an open radio access network (open radio access network, O-RAN) system, the CU may also be referred to as an O-CU (open CU), the DU may also be referred to as an O-DU, the CU-CP may also be referred to as an O-CU-CP, and the CU-UP may also be referred to as an O-CU-UP. For ease of description, the CU, the CU-CP, the CU-UP, and the DU are used as examples for description in this application. The network device may further include an active antenna unit (active antenna unit, AAU). The CU implements some functions of the gNB, and the DU implements some functions of the gNB. For example, the CU is responsible for processing a non-real-time protocol and service, to implement functions of an RRC layer. The DU is responsible for processing a physical layer protocol and a real-time service, and implements functions of a radio link control (radio link control, RLC) layer, a media access control (media access control, MAC) layer, and a physical (physical, PHY) layer. In some deployments, the CU may be further divided into a central unit control plane (CU-CP) node and a central unit user plane (CU-UP) node. The CU-CP is responsible for the control plane function, and the CU-UP is responsible for the user plane function.

The terminal device in embodiments of this application may be a wireless terminal apparatus that can receive scheduling and indication information from the network device. The terminal device may be referred to as a terminal apparatus, and may also be referred to as user equipment (user equipment, UE), a mobile station (mobile station, MS), a mobile terminal (mobile terminal, MT), or the like. The terminal apparatus may be a device with a wireless communication function (for providing voice/data connectivity to a user), for example, a handheld device, a vehicle-mounted device, or a vehicle-mounted module having a wireless connection function. Currently, some examples of terminal apparatuses are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in an internet of vehicles, a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a device-to-device (device-to-device, D2D) terminal apparatus, a vehicle to everything (vehicle to everything, V2X) communication terminal apparatus, a smart vehicle, an in-vehicle infotainment system (or referred to as a vehicle-mounted sending unit) (telematics box, T-box), a machine-to-machine/machine-type communication (machine-to-machine/machine-type communication, M2M/MTC) terminal apparatus, an internet of things (internet of things, IoT) terminal apparatus, and the like. For example, the terminal apparatus may be a vehicle-mounted device, an entire vehicle device, a vehicle-mounted module, a vehicle, an on-board unit (on-board unit, OBU), a roadside unit (roadside unit, RSU), a T-box, a chip, a system on chip (system on chip, SoC), or the like. The chip or the SoC may be mounted in a vehicle, an OBU, an RSU, or a T-box. The wireless terminal in industrial control may be a camera, a robot, or the like. The wireless terminal in the smart home may be a television, an air conditioner, a sweeper robot, a speaker, a set-top box, or the like. The terminal device may alternatively be a V2X device, for example, a smart car (smart car or intelligent car), a digital car (digital car), an unmanned car (unmanned car, driverless car, pilotless car, or automobile), a self-driving car (self-driving car or autonomous car), a pure electric vehicle (pure EV or Battery EV), a hybrid electric vehicle (hybrid electric vehicle, HEV), a range extended electric vehicle (range extended EV, REEV), a plug-in hybrid electric vehicle (plug-in HEV, PHEV), a new energy vehicle (new energy vehicle), or a road side unit (road site unit, RSU). The terminal device may alternatively be a device in device to device (device to device, D2D) communication, for example, an electricity meter or a water meter. In addition, in embodiments of this application, the terminal device may alternatively be a tag in an IoT system. An IoT is an important constituent part of future development of information technologies. A main technical feature of the IoT is that an article is connected to a network by using a communication technology, to implement an intelligent network for human-machine interconnection and thing-thing interconnection.

A tag may also be referred to as an electronic tag, an RFID tag, or a tag device. Alternatively, the tag may be referred to as an AIoT terminal device or an AIoT device. In this application, the tag may serve as a terminal device to communicate with the network device.

In one classification, tags may be classified into passive tags (passive tag), semi-passive tags (semi-passive tag), and active tags (active tag). Among them, passive tags and semi-passive tags can use backscatter (backscatter)-based communication, and active tag use communication with actively generated carriers.

In another classification, tags may be classified into the following three types of devices.

Device A (device A): The device A has no energy storage, cannot generate signals independently, and transmits signals in a backscatter manner.

Device B (device B): The device B has energy storage but cannot generate signals independently, and transmits signals in a backscatter manner. The energy stored in the device B can amplify backscattered signals.

Device C (device C): The device C has energy storage, can generate signals independently, and has active radio frequency components for transmission.

The tag in this application may be any one of the foregoing three types of devices.

The tag receives downlink signals by using a low-precision, low-power consumption, medium- or low-frequency ring oscillator or without using a local oscillator. During operation of the tag, energy and a carrier for communication are provided by the reader, and the communication is based on a backscatter carrier. For example, as shown in FIG. 2, the reader may send a carrier signal to the tag, and the tag receives the carrier signal through an antenna. A solid line in the figure is the carrier signal sent by the reader, and a dashed line indicates a backscattered signal that is transmitted by the tag in a backscatter manner based on the carrier signal. The tag may adjust, in the backscattered signal, information that needs to be transmitted. In the foregoing manner, the tag receives downlink signals by using a low-precision, low-power consumption, medium- or low-frequency ring oscillator or without using a local oscillator, so that power consumption of the tag during downlink reception may be further reduced.

The tag is a micro wireless transceiver apparatus, mainly including a built-in tag device antenna, a coupling element, and a chip. The chip of the tag has storage space that can support the reader in reading or writing tag data. After receiving, through the antenna, a radio frequency signal sent by the reader, the tag may implement coupling on the radio frequency signal by using the coupling element, so that energy can be provided for the chip of the tag within a coupling channel, and data stored in the chip can be fed back to the reader through the antenna. A communication network that is based on a cellular network infrastructure and that includes a reader and a tag may be referred to as a passive (passive) internet of things (internet of things, IoT) network or an ambient internet of things (ambient IoT), where the tag device may also be considered as a terminal device, and may be an active tag device, a passive tag device, or a semi-active tag device.

An ambient internet of things system may be applied to a passive or semi-passive IoT scenario. For example, in logistics and warehousing scenarios, the tag may be used to inventory and track goods, and perform status monitoring on the goods in a goods transportation process. For another example, in an industrial manufacturing scenario, ambient monitoring and device status monitoring may be performed by using the tag.

In the ambient internet of things system, the following operations can be performed between the tag and the reader.

Inventory operation: The inventory operation, also known as a counting operation, is used to obtain identification information of tags. For example, the reader can use a command such as query (query) or acknowledge (acknowledge, ACK) to obtain the identification information of the tags. To facilitate inventory of the tags, each tag supports four types of session (session) identifiers S0 to S3 in total, and each type of session identifier corresponds to two types of inventory states: A and B. The inventory state is indicated by an inventory flag (Inventoried flag). When the reader selects a tag, the reader sends a select (select) command carrying a session identifier to the tag, and the tag stores the session identifier. When the reader performs a inventory operation on the tags, the reader sends the query command including the session identifier to the tag. In this case, the tag may toggle an inventory state corresponding to the session identifier from A to B. If the reader sends the query command again to perform the inventory operation, the tag does not respond to the reader because the inventory state in the tag is B, avoiding repeated inventory for the same tag within one inventory round.

Read (read) operation: The read operation may be performed to read an electronic product code (electronic product code, EPC) in a storage area of the tag, a tag identifier (tag identifier, TID), content stored in a reserved area of the tag, content stored in a user storage area, or the like.

Write (write) operation: The write operation may be performed on the storage area of the tag.

Kill (kill) operation: The kill operation can make the tag permanently incapable of operating.

Lock (lock) operation: The lock operation may be performed to lock information about the tag, to prevent a read operation or a write operation on the tag. Alternatively, the lock operation may be performed to lock the storage area, to prevent or allow a read operation or a write operation on the storage area.

The foregoing operations are merely examples. Other operations may be further performed by the tag and the reader, and are not enumerated herein.

The reader in this embodiment may be a handheld or fixed device for reading or writing tag information, and may also be understood as a device communicating with a tag. The reader may be a terminal device, a network device, or a device having a read/write function. The reader may also be an IAB node or a relay (relay) node.

In this application, predefined content is usually defined in a standard, does not need to be configured by another device, and is information recorded/written in advance in hardware and/or software of the terminal apparatus, or may be understood as information that cannot be changed by a network apparatus or another terminal apparatus. Preconfigured content is usually information recorded/written in advance in hardware and/or software of the terminal apparatus, is determined by a factory device vendor, and may be changed by using software or hardware.

A (pre)configuration may be classified into a network apparatus (pre)configuration and a terminal apparatus (pre)configuration. If a (pre)configuration is a network apparatus (pre)configuration, the (pre)configuration may be performed based on a system information block (system information block, SIB) or RRC signaling. If a (pre)configuration is a terminal apparatus (pre)configuration, the (pre)configuration may be performed based on PC5-RRC signaling.

FIG. 3 is a diagram of communication system applicable to an embodiment of this application. As shown in FIG. 3, the communication system includes a network device and a tag (tag). The tag may be an independent device, or the tag may be integrated with a terminal device, that is, the tag is a part of the terminal device. In the communication system, the network device may have a function of a reader (reader) in a radio frequency identification (radio frequency identification, RFID) system, that is, the network device may serve as a reader to communicate with the tag.

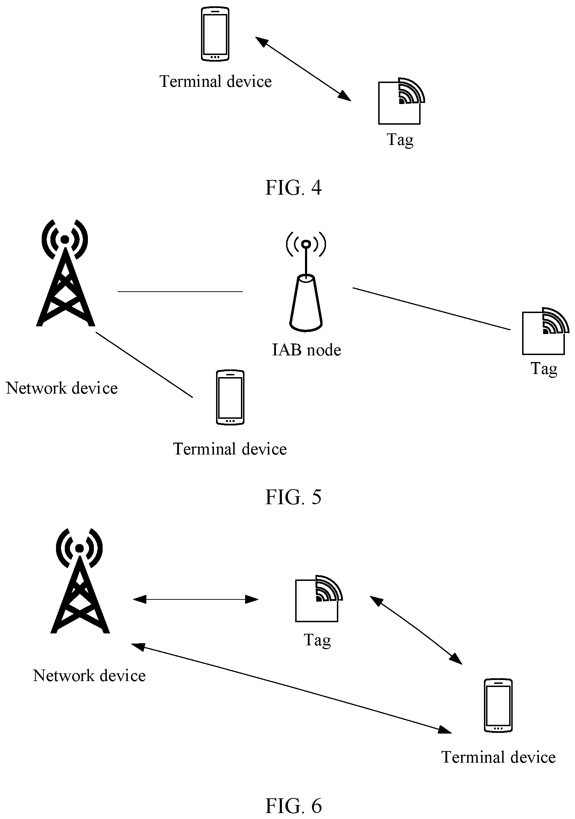

FIG. 4 is a diagram of another communication system applicable to an embodiment of this application. As shown in FIG. 4, the communication system includes a terminal device and a tag. The tag may be an independent device, or the tag may be integrated with the terminal device. In the communication system, the terminal device may have a function of a reader in an RFID system, that is, the terminal device may serve as the reader to communicate with the tag device.

FIG. 5 is a diagram of another communication system applicable to an embodiment of this application. As shown in FIG. 5, the communication system includes a network device, an integrated access and backhaul (integrated access and backhaul, IAB) node, and a tag. The communication system may further include another device, for example, include a device such as a terminal device. In the communication system, the network device may have a function of a reader in an RFID system, the IAB node may serve as a relay node between the network device and the tag, the tag transmits information to the IAB node, and the IAB node forwards the information to the network device through a Uu interface.

In this application, a communication system including a network device, a terminal device, and a tag may alternatively be a system of a separated architecture. In the communication system, as shown in FIG. 6, the network device and the terminal device may directly communicate with each other. The network device may further have a function of a reader in an RFID system. An uplink connection exists between the tag and the network device, and a downlink connection exists between the tag and the terminal device. The terminal device may transmit information to the tag, and then the tag forwards the information to the network device. Alternatively, a downlink connection exists between the tag and the network device, and an uplink connection exists between the tag and the terminal device. The network device may transmit information to the tag, and then the tag forwards the information to the terminal device. Energy required by the tag to send the information may be provided by an excitation signal, and the excitation signal may be from the network device or the terminal device.

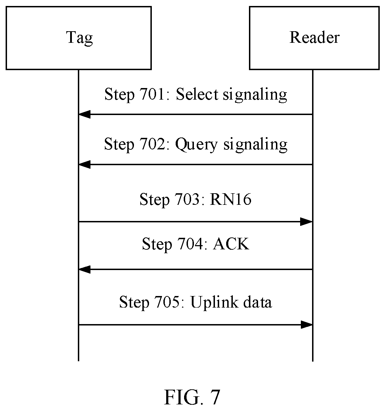

In AIoT, before a reader performs an inventory operation on a tag, the tag needs to access the reader in a random access manner. After randomly accessing the reader, the tag may report an identifier of the tag to the reader, so that the reader can determine presence of the tag in a coverage area. For example, FIG. 7 is a diagram of an inventory procedure, including the following steps.

Step 701: The reader sends paging or select (select) signaling for selecting or paging one tag or a group of tags for access.

The paging or select signaling includes mask (mask) information or a group identifier. One piece of mask information or one group identifier may match a plurality of tags. If mask information included in a tag matches the mask information included in the paging or select signaling, it indicates that the tag is selected, or if a group identifier included in a tag matches the group identifier included in the paging or select signaling, it indicates that the tag is selected. A paging or select command may further include a flag indicator and/or an indicator of an action performed on a flag. When the tag has a plurality of flags, the flag indicator may indicate a flag that is indicated. For example, there are four identifiers, and a 1^{st} identifier is indicated with, for example, S1. The action indicator indicates that the paged or selected tag sets the indicated flag (if there is only one flag, no indicator is needed for the flag) to a bit, for example, to a bit 1 or 0, or A or B. In addition, a flag of a tag that is not selected is set to an opposite bit, that is, 0 or 1, or B or A. Certainly, no action or change may be performed on or made to the flag that is not selected.

Step 702: The reader sends query (Query) signaling, where the query signaling is used for initializing an inventory round.

For example, the query signaling includes a value of a parameter Q, and the parameter Q is used for calculating a total quantity of slots allocated by the reader.

Step 703: The tag selects a slot to send a 16-bit random number (16-bit random number, RN16).

Herein, the RN16 is used as an example. The tag may alternatively send a random number of another length, for example, an 8-bit random number.

Specifically, the tag may calculate, based on the value of Q, that a range of slots for access is [0, 2^{Q}-1]. The tag generates a random number within [0, 2^{Q}-1] based on the value of Q, and uses the random number as an initial value of a counter. For example, if Q=4, the random number generated by the tag is within [0, 15]. For example, if the random number generated by the tag is 10, the initial value of the counter is 10.

Each time the tag receives a piece of query repetition (QueryRep) signaling, the value of the counter is decreased by 1. When the value of the counter is equal to 0, the tag may send the RN16. The RN16 may be used for triggering a random access procedure, and may be used as a random access request message. A 1^{st} slot after the query signaling is a slot 0. If the random number generated by the tag is 0, the RN16 may be sent immediately after the query signaling is received.

Step 704: If the reader successfully receives the RN16, the reader feeds back an acknowledgment (acknowledgment, ACK) message, where the ACK message includes the RN16 from the tag.

The ACK message may also be referred to as a random access response message.

Step 705: If the tag receives the ACK message including the RN16 of the tag, the tag sends uplink data to the reader.

If the tag receives the ACK message including the RN16 of the tag, the tag determines that random access succeeds, so that the uplink data can be sent. For example, the uplink data may be an electronic product code (electronic product code, EPC) of the tag. The tag may also toggle the flag, for example, toggle the flag from the state A to the state B.

If the ACK message received by the tag does not include the RN16 of the tag, the tag ignores the ACK message, and determines that the random access fails.

After receiving the uplink data of the tag, the reader may send query repetition signaling to trigger a next slot.

Names of the messages in the foregoing procedure are merely examples, and there may be other message names. Details are not described herein.

In the foregoing inventory procedure, if a plurality of tags send RN16 in one slot, even if the reader can identify the RN16 of the plurality of tags, the reader sends the query repetition signaling to only one tag. In other words, contention resolution can be completed for only one tag, and remaining tags that send RN16 can only perform access again. Therefore, in the foregoing inventory procedure, a random access capacity is not high. In other words, a total quantity of tags that can perform access in unit time is limited. Therefore, this application provides a method, to increase a random access capacity and improve random access efficiency.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that, with the evolution of the network architecture and the emergence of new service scenarios, the technical solutions provided in embodiments of this application are also applicable to similar technical problems.

When the method provided in this application is applied to the system in FIG. 3 to FIG. 6, the terminal device or a module in the terminal device in FIG. 3 to FIG. 6 may implement a method performed by the terminal device in embodiments of this application, and the network device or a module in the network device in FIG. 3 to FIG. 6 may implement a method performed by the network device in embodiments of this application.

It may be understood that a specific structure of an execution entity of the method provided in embodiments of this application is not particularly limited in this application. In this application, the method performed by the terminal device may be applied to the terminal device or a module in the terminal device; and the method performed by the network device may be applied to the network device or a module in the network device, or may be applied to the terminal device or a module in the terminal device, provided that communication can be performed based on the method provided in embodiments of this application by running a program that records code of the method provided in embodiments of this application. The following uses interaction between a terminal device and a network device as an example for description. During actual application, the method provided in this application may also be applied to interaction between terminal devices, and the method provided in this application may also be applied to interaction between a tag (or an AIoT device) and a terminal device.

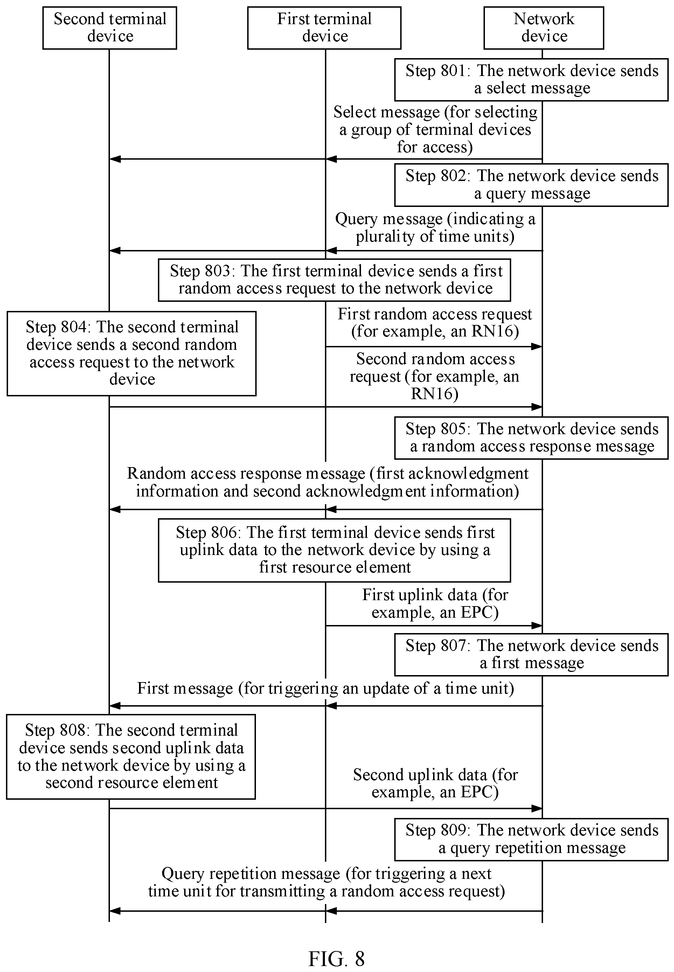

FIG. 8 is a schematic flowchart of an access method according to an embodiment of this application. In a procedure of the method, a terminal device may be replaced with a tag, a device A, a device B, a device C, or an AIoT device, and a network device may be replaced with a reader or a terminal device. The method includes the following steps.

Step 801: The network device sends a select message, where the select message is used for selecting or paging one terminal device or a group of terminal devices for access.

After receiving a first paging message from a core network, the network device may send the select message. The first paging message is used for paging one terminal device or a group of terminal devices. The select message may also be referred to as a paging message, select signaling, or another name, and a specific message name is not limited.

The select message may include mask (mask) information or a group identifier. One piece of mask information or one group identifier may match a plurality of tags. If mask information included in a tag matches the mask information included in the select message, it indicates that the tag is selected. Alternatively, if a group identifier included in a tag matches the group identifier included in the select message, it indicates that the tag is selected.

The select message may include a first flag and a first action indicator. To be specific, the select message may indicate the selected tag to perform a first action on the first flag. Specifically, the first action may be setting the first flag to A or B, or 1 or 0; and a tag that is not selected may perform an opposite action, that is, setting the first flag to B or A, or 0 or 1. Alternatively, no action may be performed on the tag that is not selected.

Optionally, if the tag has only one flag, there is no need to indicate, in the select message, a specific flag or a specific session on which an operation is performed, and this operation (indicating a specific flag) may be performed only when there are a plurality of flags or a plurality of sessions. Step 802: The network device sends a query message, where the query message indicates a plurality of time units.

The query message may include a specific value of the first flag. For example, if the first flag is A, the query message may include the first flag (in a case in which the tag supports a plurality of flags) and the value (for example, A) of the first flag, or include only the value of the first flag. The query message indicates access of a terminal device that matches the value of the first flag. For example, if the value of the first flag is the state A, it indicates that the query message is used for selecting a terminal device whose first flag is the state A for access. If the flag of the terminal device is the state A and matches the first flag, it may be determined that the terminal device is selected. If the flag of the terminal device is state B and does not match the first flag, it may be determined that the terminal device is not selected, and subsequent steps may not be performed.

How the query message indicates the plurality of time units is not limited in this application.

For example, the query message includes a value of a parameter Q, and the parameter Q is used for determining a total quantity of time units allocated by the network device. For example, if Q=4, the total quantity of time units is 2^{Q}-1=16, that is, the query message indicates 16 time units. The query message may also be referred to as query signaling or another name.

Alternatively, the select message in step 801 and the query message in step 802 may be combined into one message. In other words, the network device selects or pages one terminal device or a group of terminal devices for access and indicates a plurality of time units by using only one message.

In this application, the time unit may be a slot, or may be a subframe, a frame, or the like. Different time units may have a same length or different lengths. For example, in this application, one time unit is triggered by using one trigger message (which, for example, may be a query message or a query repetition message), a length of the time unit in time domain may be an interval between two adjacent trigger messages, and a specific quantity of slots is determined by the tag based on a quantity of received trigger messages or a time unit index carried in the trigger message.

Step 801 and step 802 are optional steps, and the two steps may be combined into one message. If the method provided in this application is applied to scenarios other than AIoT, step 801 and step 802 may not be performed.

Step 803: A first terminal device sends a first random access request to the network device.

Correspondingly, the network device receives the first random access request.

In this application, the first random access request is used for initiating random access. The first random access request sent by the first terminal device may be a 16-bit random number RN16, or an 8-bit random number, or a random number including a plurality of bits indicated in the paging message. Alternatively, the first random access request may be information such as a preamble. This is not limited in this application.

In an implementation, if the network device sends the query message, the first terminal device sends the first random access request when it is determined that a flag of the first terminal device matches the first flag in the query message.

In an implementation, the first terminal device is a passive device or a semi-passive device, or the first terminal device is an ambient internet of things terminal device. For example, the first terminal device is a tag.

The first terminal device sends the first random access request in a third time unit, where the third time unit is one of the plurality of time units indicated by the query message. How the first terminal device determines the third time unit from the plurality of time units is not limited in this application.

For example, the query message includes Q, and the first terminal device determines, based on Q, that a total quantity of time units indicated by the query message is 2^{Q}-1. Assuming that these time units are numbered from 0, an index range of these time units is [0, 2^{Q}-1]. The first terminal device generates a random number within [0, 2^{Q}-1] based on the value of Q, and the first terminal device may determine the third time unit based on the random number. Specifically, there may be the following implementations.

Implementation 1: The first terminal device uses the random number as an initial value of a first counter. Each time the first terminal device receives a query repetition (QueryRep) message, a value of the first counter is decreased by 1. When the value of the first counter is equal to 0, it may be determined that a start moment of the third time unit arrives, and the first terminal device may send the first random access request. The query repetition message may also have another name. A name of query repetition messages is not limited in this application.

Implementation 2: The first terminal device starts counting of the first counter from 0, and increases the value of the first counter by 1 each time the first terminal device receives a query repetition message. When the value of the first counter is equal to the random number, it may be determined that a start moment of the third time unit arrives, and the first terminal device may send the first random access request.

Implementation 3: The query repetition message carries a time unit index, and if the received time unit index matches the random number generated by the terminal device, the first terminal device may send the first random access request. For example, the random number generated by the terminal device is 5, and if the time unit index included in the received query repetition message is 5, the time unit index matches the random number.

The query repetition message may be used for triggering a time unit, or the query repetition message may be used for triggering an update of the time unit. It may be understood that a receiving moment of the query repetition message is an end moment of a previous time unit, and is a start moment of a next time unit. The query message may be further used for triggering a time unit 0. It may be understood that a 1^{st} time unit after the query message is the time unit 0, and a receiving moment of the query message is a start moment of the time unit 0. If the random number generated by the first terminal device is 0, the third time unit is the time unit 0. After receiving the query message, the first terminal device sends the first random access request in the time unit 0.

For another example, the query repetition message may include an index of a time unit. For example, a 1^{st} query repetition message sent by the network device carries an index 1, a 2^{nd} query repetition message sent by the network device carries an index 2, and other cases are deduced by analogy. The first terminal device generates, based on the value of Q, a random number within [0, 2^{Q}-1]. When an index in a query repetition message received by the first terminal device matches the random number, it is determined that the time unit triggered by the query repetition message is the third time unit, that is, the start moment of the third time unit may be a receiving moment of the query repetition message. If the index of the time unit starts from 0, that the index in the query repetition messages matches the random number may mean that the index in the query repetition messages is equal to the random number. If the index of the time unit starts from 1, that the index in the query repetition messages matches the random number may mean that the index in the query repetition messages plus 1 is equal to the random number.

In one time unit, a plurality of terminal devices may send random access requests. For example, if two terminal devices generate a same random number, the two terminal devices send random access requests in a same time unit.

Assuming that a second terminal device also sends a random access request in the third time unit, step 804 may be further included.

Step 804: The second terminal device sends a second random access request to the network device.

Correspondingly, the network device receives the second random access request.

In an implementation, the second random access request and the first random access request are located in a same time unit, that is, located in the third time unit. In the third time unit, another terminal device may further send a random access request, and a quantity of terminal devices that send random access requests is not limited in this application.

In another implementation, the second random access request and the first random access request are located on a same time-frequency resource, and the time-frequency resource may further include a random access request of another terminal device. This is not limited in this application.

In an implementation, the second terminal device is a passive device or a semi-passive device, or the second terminal device is an ambient internet of things terminal device. For example, the second terminal device is a tag.

For specific content of step 804, refer to step 803. Details are not described herein again.

Step 805: The network device sends a random access response message.

Correspondingly, the first terminal device and the second terminal device receive the random access response message. The random access response message may also be referred to as a contention resolution message.

The random access response message includes first acknowledgment information and second acknowledgment information, the first acknowledgment information indicates that random access of the first terminal device succeeds, and the second acknowledgment information indicates that random access of the second terminal device succeeds.

The foregoing uses only two terminal devices as an example. If the network device further receives a random access request of another terminal device in the third time unit, the random access response message may further include corresponding acknowledgment information.

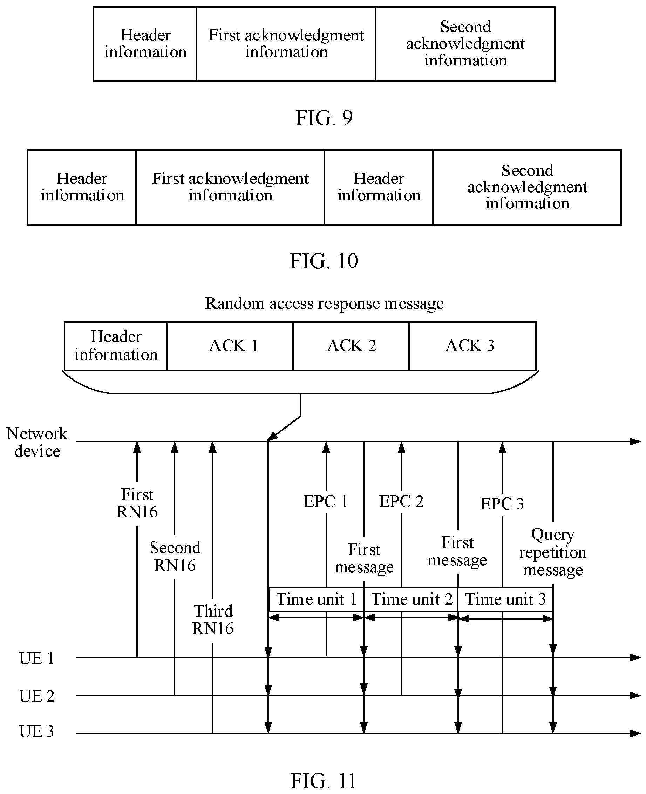

In this application, there may be a plurality of implementations of the random access response message. For example, as shown in FIG. 9, in a first implementation, the random access response message includes one piece of header (header) information, first acknowledgment information, and second acknowledgment information. The first acknowledgment information includes a part or all of content of the first random access request, and the second acknowledgment information includes a part or all of content of the second random access request.

The header information indicates that a message corresponding to the header information is a random access response message. For example, the header information includes a logical channel identifier (logical channel identifier, LCID) corresponding to the random access response message, and may further include information such as a reserved bit.

In this implementation, the header information may further include quantity information of the acknowledgment information. For example, in FIG. 9, the header information may indicate that the random access response message includes two pieces of acknowledgment information.

In a second implementation, the random access response message includes a plurality of pieces of header information, and each piece of acknowledgment information corresponds to one piece of header information. Specifically, each piece of header information may be followed by one acknowledgment message. For example, as shown in FIG. 10, the random access response message includes two pieces of header information: first header information and second header information. The first header information corresponds to the first acknowledgment information, the first header information is adjacent to the first acknowledgment information, the second header information corresponds to the second acknowledgment information, and the second header information is adjacent to the second acknowledgment information.

Optionally, the random access response message may be indicated by a preamble index. The preamble index indicates a specific random access response corresponding to the random access request message. Specifically, the random access response message information may also be included in the first or second acknowledgment message.

In this implementation, when receiving the random access response message, the terminal device may determine, based on a quantity of pieces of header information, a quantity of pieces of acknowledgment information included in the random access response message.

In this application, the random access response message may include a preamble sequence at a beginning thereof, and the preamble sequence indicates that downlink data is transmitted. The random access response message may further include an end indication or an end sequence at a later part thereof, and the end indication or the end sequence indicates that transmission of a random access response message ends.

Step 806: The first terminal device sends first uplink data to the network device by using a first resource element.

Correspondingly, the network device receives the first uplink data. The first uplink data may be an EPC of the first terminal device, or may be other data. This is not limited in this application.

The first resource element is determined based on the first acknowledgment information. There may be a plurality of implementations of determining the first resource element.

In a first implementation, the first resource element is determined based on a location of the first acknowledgment information in a plurality of pieces of acknowledgment information included in the random access response message. For example, there is a correspondence between at least one of a time domain resource included in the first resource element and a frequency domain resource included in the first resource element and the location of the first acknowledgment information in the plurality of pieces of acknowledgment information. The correspondence may be preset or preconfigured, or may be configured by the network device. This is not limited in this application. The first terminal device may determine at least one of an index of the time domain resource and an index of the frequency domain resource of the first resource element based on the correspondence and the location of the first acknowledgment information in the plurality of pieces of acknowledgment information.

Optionally, the first resource element may also include a code domain resource. A specific code domain resource to be used may be determined based on a location of the code domain resource in plurality of pieces of acknowledgment information in the random access response message.

For example, the correspondence includes that the index of the time domain resource of the first resource element is the same as a location number of the first acknowledgment information in the plurality of pieces of acknowledgment information. If the first acknowledgment information is a 1^{st} piece of acknowledgment information in the plurality of pieces of acknowledgment information, to be specific, the location number of the first acknowledgment information is 0, the index of the time domain resource of the first resource element is 0, and the time domain resource of the first resource element is a 1^{st} time unit after the random access response message. If the first acknowledgment information is a 2^{nd} piece of acknowledgment information in the plurality of pieces of acknowledgment information, to be specific, the location number of the first acknowledgment information is 1, the index of the time domain resource of the first resource element is 1, and the time domain resource of the first resource element is a 2^{nd} time unit after the random access response message. Other cases are deduced by analogy. Details are not described again. The foregoing is merely an example. A specific implementation of the correspondence is not limited in this application, and details are not described herein again. In addition, the correspondence may further include that an index of a frequency domain resource of the first resource element is the same as the location number of the first acknowledgment information in the plurality of pieces of acknowledgment information. For details, refer to related descriptions of the time domain resource. Details are not described herein again.

In this implementation, the first resource element is indirectly indicated by using the correspondence, so that overheads of resource configuration can be reduced, and power consumption of the terminal device can be reduced.

With reference to the foregoing description, if it is determined, based on the first acknowledgment information, that the 1^{st} time unit after the random access response message is the first time unit, the first uplink data is sent in the 1^{st} time unit after the random access response message. A start moment of the 1^{st} time unit after the random access response message may be a moment at which receiving of the random access response message is completed. Alternatively, after sending the random access response message, the network device may separately send a first message. The first message is used for triggering the time unit or the first message is used for triggering an update of the time unit. It may be understood that a moment at which receiving of the first message is completed is a start moment of the time unit. In this case, when the first message is received, it is determined that the receiving moment of the first message is the start moment of the first time unit.

If it is determined, based on the first acknowledgment information, that an n^{th} time unit after the random access response message is the first time unit, where n is an integer greater than 0, there are the following two implementations: In Implementation 1, the first uplink data is sent in a 1^{st} time unit after n-1 first messages. In Implementation 2, the first uplink data is sent in a 1^{st} time unit after the first message including a first index.

The first message is used for triggering the time unit, or the first message is used for triggering the update of the time unit. It may be understood that a receiving moment of the first message is a start moment of the time unit used for triggering the first message. When the first message is received by the first terminal device, it may be determined that the start moment of the time unit triggered by the first message is the receiving moment of the first message. After sending the random access response message, the network device may send one first message each time the network device successfully receives one piece of uplink data from the terminal device. The first message may be one message, or may include a plurality of messages, that is, a plurality of messages have a function of triggering one time unit, for example, a contention resolution cell and a time unit trigger message. A name is not limited.

In Implementation 1, the first terminal device may count a quantity of times of receiving the first message, and after receiving n-1 first messages, use a receiving moment of a (n-1)^{th} first message as the start moment of the first time unit. In Implementation 2, each first message includes an index of the first message, and if the first terminal device determines that the first message includes the first index matching the index of the first time unit, it is determined that the time unit triggered by the first message is the first time unit. That is, the 1^{st} time unit after the first message is the first time unit, and the receiving moment of the first message is the start moment of the first time unit. That the first index matches the index of the first time unit may mean that the first index is equal to the index of the first time unit. For example, the index of the first time unit is 1. When a first message including the index 1 is received, it may be determined that the 1^{st} time unit after the first message is the first time unit.

In the foregoing Implementation 1 and Implementation 2, an example in which the random access response message triggers the 1^{st} time unit is used. If the network device separately sends a first message after sending the random access response message, to trigger the 1^{st} time unit by using the first message, n-1 in Implementation 1 may be replaced with n. That the first index matches the index of the first time unit in Implementation 2 may mean that the first index is equal to the index of the first time unit plus 1.

It should be noted that, although both the query repetition message and the first message may be used for triggering a time unit, a time unit triggered by the first message is used for transmitting uplink data, and a time unit triggered by the query repetition message is used for transmitting a random access request. Optionally, the first message may include first indication information, and the first indication information indicates that the time unit triggered by the first message is used for transmitting the uplink data. In this way, the time unit used for transmitting the random access request and the time unit used for transmitting the uplink data can be distinguished, to prevent the terminal device that performs random access from initiating random access after the terminal device receives the first message, and improve data transmission efficiency.

For example, as shown in FIG. 11, it is assumed that the network device receives random access requests of three terminal devices in a same time unit: a first RN16 of UE 1, a second RN16 of UE 2, and a third RN16 of UE 3. The random access response message sent by the network device includes three pieces of acknowledgment information: ACK 1, ACK 2, and ACK 3. The ACK 1 indicates that random access of the UE 1 succeeds, the ACK 2 indicates that random access of the UE 2 succeeds, and the ACK 3 indicates that random access of the UE 3 succeeds. Assuming that a correspondence between a time domain resource used by each terminal device to send uplink data and acknowledgment information of each terminal device is that a location number of the acknowledgment information of each terminal device is the same as an index of a time unit in which the terminal device sends the uplink data. In this way, the UE 1 may determine to send an EPC 1 in a 1^{st} time unit (that is, a time unit 1) after the random access response message, and after receiving the EPC 1, the network device sends the first message; the UE 2 may determine to send an EPC 2 in a 2nd time unit (that is, a time unit 2) after the random access response message, after the UE 2 receives a 1^{st} first message, the UE 2 determines that a start moment of the time unit 2 arrives, and the UE 2 sends an EPC 2 in the time unit 2, and after receiving the EPC 2, the network device sends the first message; and the UE 3 may determine to send an EPC 3 in a 3rd time unit (that is, a time unit 3) after the random access response message, and after the UE 3 receives the 2nd first message, the UE 3 determines that a start moment of the time unit 3 arrives, and the UE 3 sends the EPC 3 in the time unit 3. After receiving the EPC 3, the network device sends the query repetition message, to trigger a time unit used for transmitting the random access request. Similarly, the foregoing three time units may also be replaced with three frequency units.

In this implementation, the frequency domain resource of the first resource element may alternatively be preset. For example, the frequency domain resource of the first resource element is the same as a frequency domain resource occupied by the first random access request.

In a second implementation, the first acknowledgment information includes resource configuration information. The resource configuration information indicates at least one of the time domain resource and the frequency domain resource of the first resource element. Optionally, if the first resource element further includes the code domain resource, the resource configuration information may further indicate the code domain resource of the first resource element.

In this implementation, the first resource element is directly indicated by using the resource configuration information, so that resources can be flexibly configured for different terminal devices, to improve resource configuration efficiency.

The time domain resource indicated by the resource configuration information may be the index of the time unit, and the frequency domain resource indicated by the resource configuration information may be an index of a subcarrier or a carrier, or may be a subcarrier offset. The subcarrier offset indicates an offset between a subcarrier used for transmitting uplink data and a subcarrier on which the random access response message is located. For example, if the carrier is 180 kHz, the subcarrier may be less than 180 kHz, for example, 15 kHz.

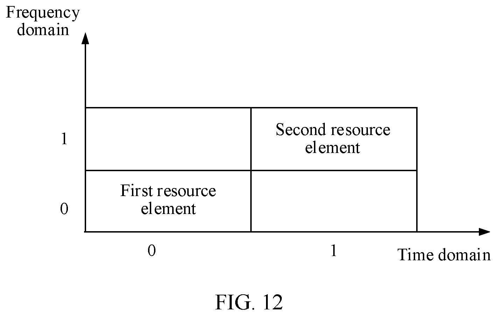

For example, as shown in FIG. 12, the resource configuration information included in the first acknowledgment information indicates that the time domain resource of the first resource element is a time unit 0, and the frequency domain resource of the first resource element is a subcarrier 0. The figure may further include a resource element indicated by acknowledgment information of another terminal device. For example, it is assumed that the random access response message includes second acknowledgment information, third acknowledgment information, and fourth acknowledgment information. Resource configuration information included in the second acknowledgment information indicates that a time domain resource of a second resource element is a time unit 1, and a frequency domain resource of the second resource element is a subcarrier or carrier 1. Other cases are not described in detail again.

Step 807: The network device sends the first message.

As described above, the first message is used for triggering the time unit used for transmitting uplink data, or the first message is used for triggering the update of the time unit. The uplink data is uplink data obtained after the random access is completed.

Step 808: The second terminal device sends second uplink data to the network device by using the second resource element.

Correspondingly, the network device receives the second uplink data. The second uplink data may be data such as an EPC of the second terminal device. This is not limited in this application.

The second resource element is determined based on the second acknowledgment information. For details about how to determine the second resource element based on the second acknowledgment information, refer to a determining manner of the first resource element. Details are not described herein again.

Optionally, after sending the uplink data or receiving a message such as a message for ending communication, updating the time unit, or query repetition, the first terminal device and the second terminal device may update the flag. For example, if the flag used when the first terminal device and the second terminal device receive the select message is the state A, the first terminal device and the second terminal device may update the flag to the state B.

Optionally, after determining, by the network device, that terminal devices corresponding to all acknowledgment information in the random access response message send uplink data, the method may further include the following step.

Step 809: The network device sends the query repetition message, where the query repetition message is used for triggering a next time unit used for transmitting the random access request.

The query repetition message may also be referred to as query repetition signaling or another name. Because the first terminal device and the second terminal device have completed data transmission, the first terminal device and the second terminal device no longer respond to the query repetition message.

According to the foregoing procedure, when the plurality of terminal devices send the random access request in a same time unit, after receiving a plurality of random access requests in a same time unit, the network device may include, in one random access response message, acknowledgment information corresponding to each of the plurality of random access requests, so that contention resolution for the plurality of terminal devices is complete by using one random access response message and the plurality of terminal devices complete random access, to increase a random access capacity and improve random access efficiency.

In the foregoing procedure, the network device concatenates the plurality of pieces of acknowledgment information in one random access response message for sending, to perform contention resolution on a plurality of terminals. This application further provides another method. A network device may sequentially send a plurality of random access response messages, to perform contention resolution on a plurality of terminals. Details are described below.

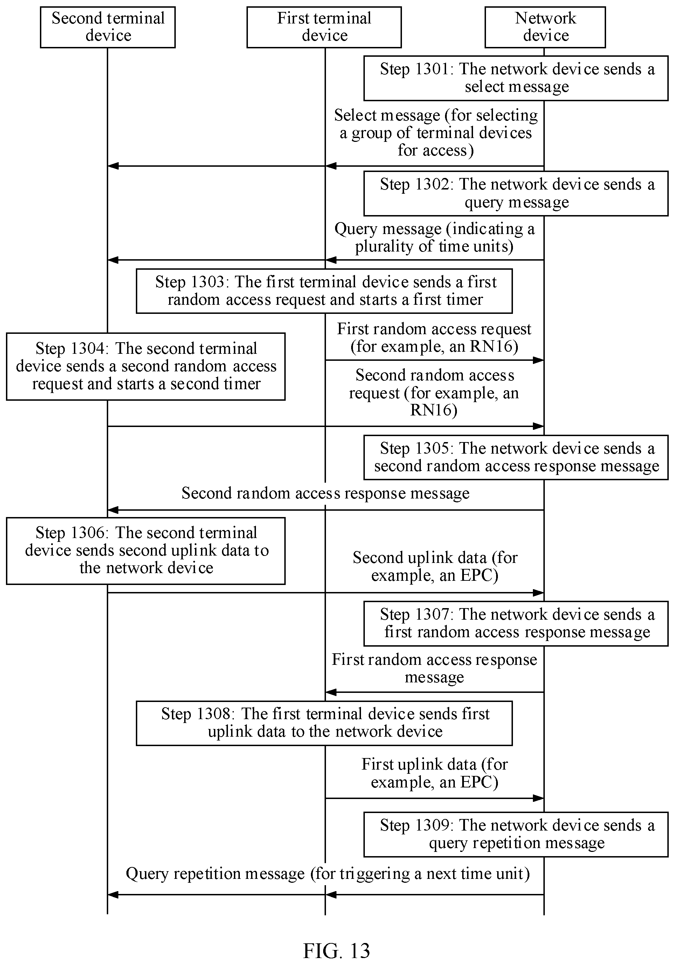

FIG. 13 is a schematic flowchart of an access method according to an embodiment of this application. In a procedure of the method, a terminal device may be replaced with a tag, and a network device may be replaced with a reader or a terminal device. The method includes the following steps.

Step 1301: The network device sends a select message, where the select message is used for selecting or paging one terminal device or a group of terminal devices for access.

Step 1302: The network device sends a query message, where the query message indicates a plurality of time units.

Step 1301 and step 1302 are optional steps. If the method provided in this application is applied to scenarios other than AIoT, step 1301 and step 1302 may not be performed. Alternatively, functions of the two steps are combined into one message.

Step 1303: A first terminal device sends a first random access request to the network device, and starts a first timer.

Correspondingly, the network device receives the first random access request.

Timing duration of the first timer is preset or preconfigured, or is determined based on configuration information from the network device. The first terminal device is a passive device or a semi-passive device, or the first terminal device is an ambient internet of things terminal device.

Step 1304: A second terminal device sends a second random access request to the network device, and starts a second timer.

Correspondingly, the network device receives the second random access request.

Timing duration of the second timer is preset or preconfigured, or is determined based on configuration information from the network device. The second terminal device is a passive device or a semi-passive device, or the second terminal device is an ambient internet of things terminal device.

In an implementation, the second random access request and the first random access request are located in a same time unit, that is, located in a third time unit. In the third time unit, another terminal device may further send a random access request, and a quantity of terminal devices that send random access requests is not limited in this application.

In another implementation, the second random access request and the first random access request are located on a same time-frequency resource, and the time-frequency resource may further include a random access request of another terminal device. This is not limited in this application.

The following provides description by using an example in which the network device first sends a second random access response message and then sends a first random access response message.

Step 1305: The network device sends the second random access response message.

The second random access response message indicates that random access of the second terminal device succeeds.

The second terminal device may determine, based on the second random access response message, that the random access succeeds, to send second uplink data to the network device. The second random access response message includes one piece of header information and one piece of acknowledgment information, and specific content of the second random access response message is not limited.

For the first terminal device, before the first timer expires, if the received random access response message does not match the first random access request, for example, the second random access response message is received, the first terminal device ignores the second random access response message, and continues to wait for the first random access response message. That the random access response message does not match the first random access request may mean that the random access response message indicates that random access of a terminal device other than the first terminal device succeeds.

Before the first timer expires, if the first terminal device receives the first random access response message, the timer is stopped, and first uplink data is sent to the network device.

Alternatively, based on a network indication, where for example, the indication is carried in step 1301 or step 1302, the indication information may indicate whether the terminal uses the foregoing manner, that is, if the first terminal device receives a contention resolution message that is not of the first terminal device within the timing duration of the timer, the first terminal device continues to perform monitoring or considers that contention resolution fails.

If the first random access response message is not received when the first timer expires, or first signaling is received during running of the first timer, it is determined that random access fails. The first signaling is used for triggering a time unit, or the first signaling indicates that a time unit in which the first random access request is located ends. The first signaling may be a query repetition message, or may be another message. This is not limited in this application.

Step 1306: The second terminal device sends the second uplink data to the network device.

The second uplink data may be an EPC of the second terminal device, or may be other data. This is not limited in this application.

After receiving the second uplink data, the network device may send the random access response message again. For details, refer to the following descriptions.

Step 1307: The network device sends the first random access response message.

The first random access response message indicates that random access of the first terminal device succeeds.

Step 1308: The first terminal device sends the first uplink data to the network device.

The first uplink data may be an EPC of the first terminal device, or may be other data. This is not limited in this application.

Optionally, step 1309: The network device sends a query repetition message, where the query repetition message triggers a next time unit used for transmitting the random access request.

According to the foregoing procedure, when a plurality of terminal devices send random access requests in a same time unit, after receiving a plurality of random access requests in a same time unit, the network device may sequentially send a plurality of random access response messages, to complete contention resolution for the plurality of terminal devices, so that the plurality of terminal devices complete random access, to increase a random access capacity and improve random access efficiency.

It may be understood that, to implement functions in the foregoing embodiments, the terminal device or the network device includes corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

The following are diagrams of possible structures of communication apparatuses according to embodiments of this application. The communication apparatuses may be configured to implement functions of the terminal device or the network device in the foregoing method embodiments. Therefore, beneficial effects of the foregoing method embodiments can also be implemented.

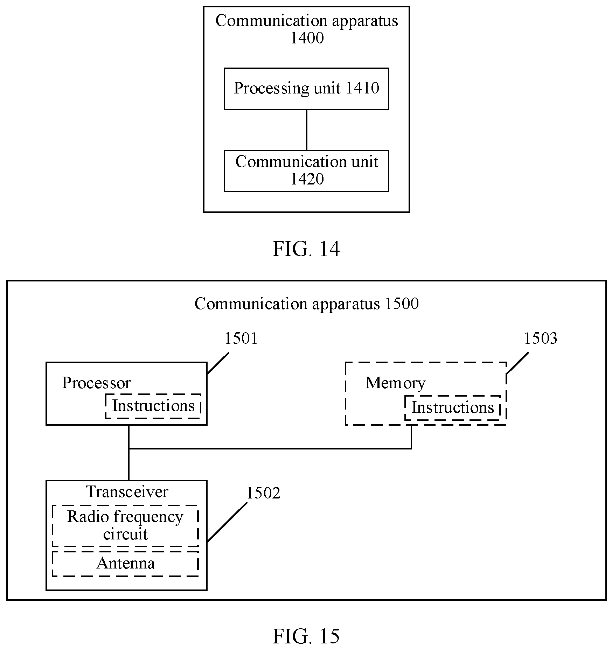

As shown in FIG. 14, the communication apparatus 1400 includes a processing unit 1410 and a communication unit 1420. The communication apparatus 1400 is configured to implement a function of the terminal device or the network device in various method embodiments shown above.

In an implementation, the communication apparatus 1400 is configured to implement the following functions.

A processing unit is configured to send a first random access request to a network device through a communication unit.

The processing unit is configured to receive a random access response message from the network device through the communication unit, where the random access response message includes first acknowledgment information and second acknowledgment information, and the first acknowledgment information indicates that random access of the first terminal device corresponding to the first random access request succeeds.

In an implementation, the communication apparatus 1400 is configured to implement the following functions.

A processing unit is configured to receive a first random access request and a second random access request in a time unit through a communication unit, where the first random access request is from a first terminal device, and the second random access request is from a second terminal device.

The processing unit is configured to send a random access response message through the communication unit, where the random access response message includes first acknowledgment information and second acknowledgment information, the first acknowledgment information indicates that random access of the first terminal device succeeds, and the second acknowledgment information indicates that random access of the second terminal device succeeds.

In an implementation, the communication apparatus 1400 is configured to implement the following functions.

A processing unit is configured to receive a first random access request and a second random access request in a time unit through a communication unit, where the first random access request is from a first terminal device, and the second random access request is from a second terminal device.

The processing unit is configured to send a first random access response message and a second random access response message through the communication unit, where the first random access response message indicates that random access of the first terminal device succeeds, and the second random access response message indicates that random access of the second terminal device succeeds.

In an implementation, the communication apparatus 1400 is configured to implement the following functions.

A communication unit is configured to: send a first random access request to a network device, and start a timer; and before the timer expires, receive a second random access response message.

A processing unit is configured to: if the second random access response message does not match the first random access request, ignore the second random access response message; and receive a first random access response message, and if the first random access response message matches the first random access request, send first uplink data to the network device.

For more detailed descriptions about the processing unit 1410 and the communication unit 1420, directly refer to related descriptions in the foregoing method embodiments. Details are not described herein.

It should be understood that division of the units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated together, or may be implemented independently. The processing element herein may also be a processor, and may be an integrated circuit having a signal processing capability. In an implementation process, operations in the foregoing methods or the foregoing units may be implemented by using a hardware integrated logic circuit in the processor element or may be implemented in a form in which the processing element invokes software.

In an example, a unit in any one of the foregoing apparatuses may be one or more integrated circuits configured to implement the foregoing methods, for example, one or more application-specific integrated circuits (application-specific integrated circuit, ASIC), one or more microprocessors (digital signal processor, DSP), one or more field programmable gate arrays (field programmable gate array, FPGA), or a combination of at least two of these forms of integrated circuits. For another example, when the units in the apparatus may be implemented in a form in which a processing element schedules a program, the processing element may be a processor, for example, a general-purpose central processing unit (central processing unit, CPU) or another processor that can invoke the program. For still another example, the units may be integrated and implemented in a form of a system-on-a-chip (system-on-a-chip, SoC).

The foregoing unit for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit for sending is an interface circuit of the apparatus, and is configured to send a signal to another apparatus. For example, when the apparatus is implemented in the manner of the chip, the sending unit is an interface circuit that is of the chip and that is configured to send a signal to another chip or apparatus.

In another possible product form, the terminal device or the network device in embodiments of this application may be implemented by using a general bus architecture. For ease of description, FIG. 15 is a diagram of a structure of a communication apparatus 1500 according to an embodiment of this application. The communication apparatus 1500 includes a processor 1501 and a transceiver 1502. The communication apparatus 1500 may be a terminal device, or a chip or a chip system in the terminal device; or the communication apparatus 1500 may be a network device, or a chip or a module in the network device. FIG. 15 shows only main components of the communication apparatus 1500. In addition to the processor 1501 and the transceiver 1502, the communication apparatus 1500 may further include a memory 1503 and an input/output apparatus (not shown in the figure).

Optionally, the processor 1501 is mainly configured to: process a communication protocol and communication data, control the entire communication apparatus, execute a software program, and process data of the software program. The memory 1503 is mainly configured to store the software program and data. The transceiver 1502 may include a radio frequency circuit and an antenna. The radio frequency circuit is mainly configured to: perform conversion between a baseband signal and a radio frequency signal, and process the radio frequency signal. The antenna is mainly configured to send and receive a radio frequency signal in a form of an electromagnetic wave. The input/output apparatus, such as a touchscreen, a display, or a keyboard, is mainly configured to: receive data input by a user and output data to the user.

Optionally, the processor 1501, the transceiver 1502, and the memory 1503 may be connected through a communication bus.

After the communication apparatus is powered on, the processor 1501 may read the software program in the memory 1503, interpret and execute instructions of the software program, and process the data of the software program. When data needs to be sent in a wireless manner, the processor 1501 performs baseband processing on to-be-sent data, and then outputs a baseband signal to the radio frequency circuit. The radio frequency circuit performs radio frequency processing on the baseband signal, and then sends a radio frequency signal in an electromagnetic wave form through the antenna. When data is sent to the communication apparatus, the radio frequency circuit receives the radio frequency signal through the antenna, converts the radio frequency signal into a baseband signal, and outputs the baseband signal to the processor 1501. The processor 1501 converts the baseband signal into data and processes the data.

In another implementation, the radio frequency circuit and the antenna may be disposed independently of the processor for baseband processing. For example, in a distributed scenario, the radio frequency circuit and the antenna may be disposed remotely independent of the communication apparatus.

In some embodiments, in hardware implementation, a person skilled in the art may figure out that the foregoing communication apparatus 1400 may be in a form of the communication apparatus 1500 shown in FIG. 15.

In an example, functions/implementation processes of the processing unit 1410 in FIG. 14 may be implemented by the processor 1501 in the communication apparatus 1500 shown in FIG. 15 by invoking computer-executable instructions stored in the memory 1503. Functions/implementation processes of the communication unit 1420 in FIG. 14 may be implemented by the transceiver 1502 in the communication apparatus 1500 shown in FIG. 15.

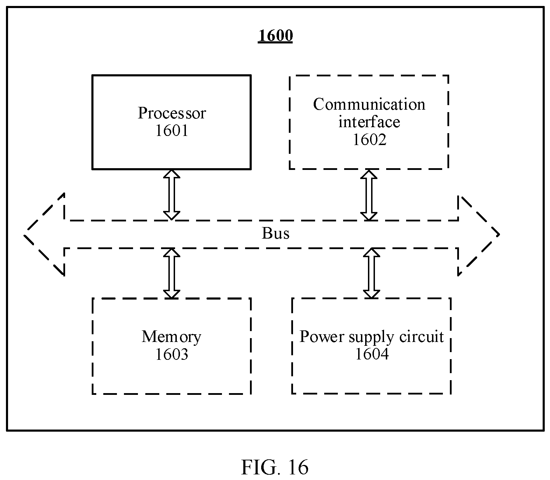

In still another possible product form, the terminal device or the network device in this application may use a composition structure shown in FIG. 16, or include components shown in FIG. 16. FIG. 16 is a diagram of composition of a communication apparatus 1600 according to this application.

As shown in FIG. 16, the communication apparatus 1600 includes at least one processor 1601. Optionally, the communication apparatus further includes a communication interface 1602.

When related program instructions are executed in the at least one processor 1601, the apparatus 1600 may be enabled to implement the method according to any one of the foregoing embodiments and the possible designs of the foregoing embodiments. Alternatively, the processor 1601 is configured to implement, by using a logic circuit or executing code instructions, the method according to any one of the foregoing embodiments and the possible designs of the foregoing embodiments.

The communication interface 1602 may be configured to receive program instructions and transmit the program instructions to the processor. Alternatively, the communication interface 1602 may be configured to perform communication interaction between the communication apparatus 1600 and another communication device, for example, exchange control signaling and/or service data. For example, the communication interface 1602 may be configured to receive a signal from an apparatus other than the communication apparatus 1600, and transmit the signal to the processor 1601, or send a signal from the processor 1601 to a communication apparatus other than the communication apparatus 1600.

Optionally, the communication interface 1602 may be a code and/or data read/write interface circuit, or the communication interface 1602 may be a signal transmission interface circuit between a communication processor and a transceiver machine, or may be a pin of a chip.

Optionally, the communication apparatus 1600 may further include at least one memory 1603, and the memory 1603 may be configured to store the related program instructions and/or data that are/is required. It should be noted that the memory 1603 may exist independently of the processor 1601, or may be integrated with the processor 1601. The memory 1603 may be located inside the communication apparatus 1600, or may be located outside the communication apparatus 1600. This is not limited.

Optionally, the communication apparatus 1600 may further include a power supply circuit 1604, and the power supply circuit 1604 may be configured to supply power to the processor 1601. The power supply circuit 1604 may be located in a same chip as the processor 1601, or may be located in a chip other than a chip in which the processor 1601 is located.

Optionally, the communication apparatus 1600 may further include a bus, and parts of the communication apparatus 1600 may be interconnected through the bus.

In some embodiments, in hardware implementation, a person skilled in the art may figure out that the foregoing communication apparatus 1400 shown in FIG. 14 may be in a form of the communication apparatus 1600 shown in FIG. 16.

In an example, functions/implementation processes of the processing unit 1410 in FIG. 14 may be implemented by the processor 1601 in the communication apparatus 1600 shown in FIG. 16 by invoking computer-executable instructions stored in the memory 1603. Functions/implementation processes of the communication unit 1420 in FIG. 14 may be implemented by the communication interface 1602 in the communication apparatus 1600 shown in FIG. 16.

It should be noted that the structure shown in FIG. 16 does not constitute a specific limitation on the terminal device or the network device. For example, in some other embodiments of this application, the terminal device or the network device may include more or fewer components than those shown in the figure, or combine some components, or split some components, or have different component arrangements. The components shown in the figure may be implemented by hardware, software, or a combination of software and hardware.

When the communication apparatus is a chip used in a terminal, the chip in the terminal implements functions of the terminal in the foregoing method embodiments. The chip in the terminal receives information from another module (for example, a radio frequency module or an antenna) in the terminal, where the information is sent by a base station to the terminal. Alternatively, the chip in the terminal sends information to another module (for example, a radio frequency module or an antenna) in the terminal, where the information is sent by the terminal to a base station.

When the communication apparatus is a module used in a base station, the module in the base station implements a function of the base station in the foregoing method embodiment. The module in the base station receives information from another module (for example, a radio frequency module or an antenna) in the base station, where the information is sent by a terminal to the base station; or the module in the base station sends information to another module (for example, a radio frequency module or an antenna) in the base station, where the information is sent by the base station to a terminal. The module in the base station herein may be a baseband chip in the base station, or may be a DU or another module. The DU herein may be a DU in an open radio access network (open radio access network, O-RAN) architecture.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a base station or a terminal. Certainly, the processor and the storage medium may exist in a base station or terminal as discrete components.

All or some of the foregoing embodiments may be implemented by using software, hardware, firmware, or any combination thereof. When software is used for implementing embodiments, all or a part of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium accessible by a computer, or a data storage device, such as a server or a data center, integrating one or more usable media. The usable medium may be a magnetic medium, for example, a floppy disk, a hard disk drive, or a magnetic tape; may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used for implementing each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that these modifications and variations fall within the scope of protection defined by the following claims of this application and equivalent technologies of the claims.

## Claims

1. An access method, comprising:
sending a first random access request to a network device; and
receiving a random access response message from the network device, wherein the random access response message comprises first acknowledgment information and second acknowledgment information, and the first acknowledgment information indicates that random access of a first terminal device corresponding to the first random access request succeeds.

2. The method according to claim 1, wherein the random access response message comprises first header information and second header information, wherein
the first header information corresponds to the first acknowledgment information, the first header information is adjacent to the first acknowledgment information, the second header information corresponds to the second acknowledgment information, and the second header information is adjacent to the second acknowledgment information.

3. The method according to claim 1, wherein the random access response message comprises one piece of header information, and the header information comprises quantity information of acknowledgment information.

4. The method according to any one of claims 1 to 3, wherein the first acknowledgment information comprises a part or all of content of the first random access request.

5. The method according to any one of claims 1 to 4, wherein the method further comprises:
sending uplink data to the network device by using a first resource element, wherein the first resource element is determined based on the first acknowledgment information.

6. The method according to claim 5, wherein that the first resource element is determined based on the first acknowledgment information comprises:
there is a correspondence between the first acknowledgment information and a time domain resource and/or a frequency domain resource of the first resource element.

7. The method according to claim 5, wherein that the first resource element is determined based on the first acknowledgment information comprises:
the first acknowledgment information comprises resource configuration information, and the resource configuration information indicates a time domain resource and/or a frequency domain resource of the first resource element.

8. The method according to any one of claims 5 to 7, wherein the time domain resource of the first resource element is a first time unit, and
if it is determined, based on the first acknowledgment information, that a 1^{st} time unit after the random access response message is the first time unit, the uplink data is sent in the 1^{st} time unit after the random access response message; or
if it is determined, based on the first acknowledgment information, that an n^{th} time unit after the random access response message is the first time unit, the uplink data is sent in a 1^{st} time unit after n-1 first messages, wherein n is an integer greater than 0, and the first message is used for triggering a time unit; or
if it is determined, based on the first acknowledgment information, that an n^{th} time unit after the random access response message is the first time unit, the uplink data is sent in a 1^{st} time unit after a first message comprising a first index, wherein the first index matches an index of the first time unit.

9. The method according to any one of claims 1 to 8, wherein the second acknowledgment information indicates that random access of a second terminal device succeeds.

10. The method according to any one of claims 1 to 9, wherein the first terminal device is an ambient internet of things terminal device.

11. An access method, comprising:
receiving a first random access request and a second random access request in a time unit, wherein the first random access request is from a first terminal device, and the second random access request is from a second terminal device; and
sending a random access response message, wherein the random access response message comprises first acknowledgment information and second acknowledgment information, the first acknowledgment information indicates that random access of the first terminal device succeeds, and the second acknowledgment information indicates that random access of the second terminal device succeeds.

12. The method according to claim 11, wherein the random access response message comprises first header information and second header information, wherein
the first header information corresponds to the first acknowledgment information, the first header information is adjacent to the first acknowledgment information, the second header information corresponds to the second acknowledgment information, and the second header information is adjacent to the second acknowledgment information.

13. The method according to claim 11, wherein the random access response message comprises one piece of header information, and the header information comprises quantity information of acknowledgment information.

14. The method according to any one of claims 11 to 13, wherein the first acknowledgment information comprises a part or all of content of the first random access request, and the second acknowledgment information comprises a part or all of content of the second random access request.

15. The method according to any one of claims 11 to 14, wherein the method further comprises:
receiving uplink data from the first terminal device by using a first resource element, wherein the first resource element is determined based on the first acknowledgment information.

16. The method according to claim 15, wherein that the first resource element is determined based on the first acknowledgment information comprises:
there is a correspondence between the first acknowledgment information and a time domain resource and/or a frequency domain resource of the first resource element.

17. The method according to claim 15, wherein that the first resource element is determined based on the first acknowledgment information comprises:
the first acknowledgment information comprises resource configuration information, and the resource configuration information indicates a time domain resource and/or a frequency domain resource of the first resource element.

18. The method according to any one of claims 15 to 17, wherein the time domain resource of the first resource element is a first time unit, and
if it is determined, based on the first acknowledgment information, that a 1^{st} time unit after the random access response message is the first time unit, the uplink data is received in the 1^{st} time unit after the random access response message; or
if it is determined, based on the first acknowledgment information, that an n^{th} time unit after the random access response message is the first time unit, the uplink data is received in a 1^{st} time unit after n-1 first messages, wherein n is an integer greater than 0, and the first message is used for triggering a time unit; or
if it is determined, based on the first acknowledgment information, that an n^{th} time unit after the random access response message is the first time unit, the uplink data is received in a 1^{st} time unit after a first message comprising a first index, wherein the first index matches an index of the first time unit.

19. An access method, comprising:
receiving a first random access request and a second random access request in a time unit, wherein the first random access request is from a first terminal device, and the second random access request is from a second terminal device; and
sending a first random access response message, and sending a second random access response message, wherein the first random access response message indicates that random access of the first terminal device succeeds, and the second random access response message indicates that random access of the second terminal device succeeds.

20. An access method, comprising:
sending a first random access request to a network device, and starting a timer; and
before the timer expires, receiving a second random access response message, and if the second random access response message does not match the first random access request, ignoring the second random access response message; and receiving a first random access response message, and if the first random access response message matches the first random access request, sending first uplink data to the network device.

21. A communication apparatus, comprising:
a processing unit, configured to send a first random access request to a network device through a communication unit, wherein
the processing unit is configured to receive a random access response message from the network device through the communication unit, wherein the random access response message comprises first acknowledgment information and second acknowledgment information, and the first acknowledgment information indicates that random access of the first terminal device corresponding to the first random access request succeeds.

22. A communication apparatus, comprising:
a processing unit, configured to receive a first random access request and a second random access request in a time unit through a communication unit, wherein the first random access request is from a first terminal device, and the second random access request is from a second terminal device, wherein
the processing unit is configured to send a random access response message through the communication unit, wherein the random access response message comprises first acknowledgment information and second acknowledgment information, the first acknowledgment information indicates that random access of the first terminal device succeeds, and the second acknowledgment information indicates that random access of the second terminal device succeeds.

23. A communication apparatus, comprising:
a processing unit, configured to receive a first random access request and a second random access request in a time unit through a communication unit, wherein the first random access request is from a first terminal device, and the second random access request is from a second terminal device, wherein
the processing unit is configured to send a first random access response message and a second random access response message through the communication unit, wherein the first random access response message indicates that random access of the first terminal device succeeds, and the second random access response message indicates that random access of the second terminal device succeeds.

24. A communication apparatus, comprising:
a communication unit, configured to: send a first random access request to a network device, and start a timer; and before the timer expires, receive a second random access response message; and
a processing unit, configured to: if the second random access response message does not match the first random access request, ignore the second random access response message; and receive a first random access response message, and if the first random access response message matches the first random access request, send first uplink data to the network device.

25. A communication apparatus, comprising a processor and a memory, wherein
the processor is configured to execute a computer program or instructions stored in the memory, to cause the communication apparatus to implement the method according to any one of claims 1 to 18.

26. A computer-readable storage medium, storing a computer program or instructions, wherein when the computer program or the instructions are run on a computer, the computer is caused to implement the method according to any one of claims 1 to 18.

27. A chip, comprising a processor, wherein the processor is coupled to a memory, and is configured to execute a computer program or instructions stored in the memory, to cause the chip to implement the method according to any one of claims 1 to 18.

28. A computer program product, wherein when a computer reads and executes the computer program product, the method according to any one of claims 1 to 18 is caused to be performed.
